# EUROPÄISCHE PATENTSCHRIFT

(11) **EP 1 145 200 B1**
(45) Veröffentlichungstag und Bekanntmachung des Hinweises auf die Patenterteilung: **05.02.2003**
(21) Anmeldenummer: 99948640.0
(22) Anmeldetag: 25.10.1999
(51) Int. Cl.: G07F 7/10

(54) **ZAHLUNGSTRANSAKTIONSVERFAHREN UND ZAHLUNGSTRANSAKTIONSSYSTEM**
METHOD AND SYSTEM FOR TRANSACTING PAYMENTS
SYSTEME ET PROCEDE DE TRANSACTION DE PAIEMENT

(43) Veröffentlichungstag der Anmeldung: 17.10.2001
(73) Patentinhaber: Swisscom Mobile AG, 3050 Bern (CH)
(72) Erfinder: RITTER, Rudolf, CH-3052 Zollikofen (CH); LAUPER, Eric, CH-3012 Bern (CH)
(74) Vertreter: BOVARD AG - Patentanwälte
(86) Internationale Anmeldenummer: CH9900503
(87) Internationale Veröffentlichungsnummer: WO01031594

(56) Entgegenhaltungen:
- WO-A-96/25828
- WO-A-98/11519
- WO-A-98/34203
- WO-A-98/37524
- WO-A-98/58510

## Beschreibung

Die vorliegende Erfindung betrifft ein Zahlungstransaktionsverfahren und ein Zahlungstransaktionssystem. Insbesondere betrifft die vorliegende Erfindung ein Zahlungstransaktionsverfahren gemäss dem Oberbegriff des unabhängigen Verfahrensanspruchs 1 und ein Zahlungstransaktionssystem zur Ausführung dieses Zahlungstransaktionsverfahrens.

Durch die zunehmende Beliebtheit und Verbreitung der mobilen Telefonie sind immer mehr Kunden von Dienststellen, sogenannte Points of Sale (POS), beispielsweise Verkaufsstellen von Produkten und/oder Dienstleistungen, mit tragbaren Mobilgeräten ausgerüstet, nämlich Mobilfunktelefone, die die Identifizierung und Authentifizierung eines betreffenden Kunden unterstützen. Da für die Bezahlung von Produkten und/oder Dienstleistungen bei der Dienststelle immer häufiger bargeldlose Zahlungsformen verwendet werden und die Kunden für diesen Zweck von den verschiedenen Dienststellen mit zahlreichen verschiedenen Identifizierungskarten ausgerüstet werden, bestand der Wunsch, für diesen Zweck die obengenannten tragbaren Mobilgeräte einzusetzen. Gebräuchliche Mobilfunktelefone umfassen ein Identifizierungsmodul, eine sogenannte SIM-Chipkarte (Subscriber Identification Module), welches eine eindeutige Benutzeridentifizierung enthält, beispielsweise eine IMSI (International Mobile Subscriber Identity), mittels welcher der betreffende Benutzer in einem Telekommunikationsnetz identifiziert werden kann. Um die Benutzung eines solchen Mobilgeräts durch einen unbefugten Benutzer zu verhindern, muss sich ein Benutzer vorerst beim Mobilgerät authentifizieren, beispielsweise indem er mittels Bedienungselementen des Mobilgeräts einen persönlichen Code (Personal Identification Number, PIN) eingibt, der unter Zuhilfenahme von Sicherheitsdiensten mit einem auf der SIM-Chipkarte gespeicherten Wert verglichen wird.

In der Patentanmeldung EP 708 547 A2 wird die Verwendung eines Mobilfunktelefons als authentifizierter Transaktionskontroller beschrieben. Gemäss der in EP 708 547 A2 offenbarten Lehre authentifiziert sich ein Kunde in einem Verkaufsgeschäft zunächst bei seinem Mobilfunktelefon, beispielsweise durch Eingabe eines persönlichen Identifizierungscodes, danach vereinbaren der Geschäftsbetreiber und der Kunde ein Transaktionspasswort, welches vom Kunden in sein Mobilfunktelefon eingegeben und zusammen mit Identifizierungsdaten, beispielsweise die Gerätenummer und die Telefonnummer des Mobilfunktelefons, drahtlos an einen Empfänger eines Bezahlungsterminals des Verkaufsgeschäfts übermittelt wird. Gemäss der in EP 708 547 A2 offenbarten Lehre werden dann vom Verkaufsgeschäft der betreffende zu bezahlende Geldbetrag, der entweder vom Bezahlungsterminal bezogen wird oder vom Kunden in sein Mobilfunktelefon eingegeben und zusammen mit dem Transaktionspasswort und den Identifizierungsdaten an den Empfänger des Bezahlungsterminals übertragen wird, und die Identifizierungsdaten zur Kreditüberprüfung an ein Kreditzentrum weitergeleitet. Das in EP 708 547 A2 beschriebene Transaktionspasswort ermöglicht insbesondere, dass das Bezahlungsterminal die vom Mobilfunktelefon übermittelten Daten der betreffenden Transaktion zuordnen kann und dadurch nicht durch eventuelle Übermittlungen von anderen Mobilfunktelefonen beeinträchtigt wird.

Es ist eine Aufgabe dieser Erfindung, ein neues und besseres Zahlungstransaktionsverfahren und ein neues und besseres Zahlungstransaktionssystem vorzuschlagen, welche insbesondere für Dienststellen mit mehreren Bezahlungsterminals und mehreren Kunden mit Mobilgeräten eingesetzt werden können.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in den Zahlungstransaktionen zwischen einem Kunden mit einem tragbaren Mobilgerät, beispielsweise ein Mobilfunktelefon oder ein kommunikationsfähiger Palm- oder Laptop-Computer, und einer Dienststelle mit mehreren Bezahlungsterminals, in welchen Zahlungstransaktionen ein Bezahlungsterminal der Dienststelle einen zu bezahlenden Transaktionstotalbetrag und eine diesem Transaktionstotalbetrag zugeordnete Transaktionsidentifizierung bestimmt und den Kunden über diesen Transaktionstotalbetrag und diese Transaktionsidentifizierung informiert, das Bezahlungsterminal bei der Bestimmung der Transaktionsidentifizierung eine Bezahlungsterminalidentifizierung in die Transaktionsidentifizierung einfügt, welche Bezahlungsterminalidentifizierung ermöglicht, das betreffende Bezahlungsterminal aus mehreren in der Dienststelle vorhandenen Bezahlungsterminals zu identifizieren, dass das Mobilgerät die vom Kunden in das Mobilgerät eingegebene Transaktionsidentifizierung über eine kontaktlose Geräteschnittstelle, beispielsweise eine Infrarotschnittstelle oder eine Funkschnittstelle, an das durch die Bezahlungsterminalidentifizierung identifizierte Bezahlungsterminal übermittelt, dass das Bezahlungsterminal nach dem Empfang der Transaktionsidentifizierung eine Bezahlungsaufforderung, die mindestens eine Dienststellenidentifizierung, die Bezahlungsterminalidentifizierung und den Transaktionstotalbetrag enthält, über die kontaktlose Geräteschnittstelle an das Mobilgerät übermittelt, und dass im Mobilgerät ein Bezahlungsbeleg, der eine Verknüpfung der Bezahlungsaufforderung mit einer Kundenidentifizierung des Kunden umfasst, vorbereitet und vom Mobilgerät über die kontaktlose Geräteschnittstelle an das Bezahlungsterminal übermittelt wird. Im erfindungsgemässen Zahlungstransaktionsverfahren und Zahlungstransaktionssystem wird also eine Zahlungstransaktion zwischen einem Kunden mit einem tragbaren Mobilgerät und einer Dienststelle mit mehreren Bezahlungsterminals in zwei Phasen durchgeführt. In der ersten Phase, in der die Transaktionsidentifizierung bestimmt, bekanntgegeben, vom Kunden in sein Mobilgerät eingegeben und an das durch die Transaktionsidentifizierung identifizierte Bezahlungsterminal übermittelt wird, werden das an der betreffenden Zahlungstransaktion beteiligte Bezahlungsterminal und das an der betreffenden Zahlungstransaktion beteiligte Mobilgerät einander zugeordnet, wobei beispielsweise eine logische Verbindung zwischen diesen Zahlungstransaktionspartnern erstellt wird. In der zweiten Phase kann dann zwischen den Zahlungstransaktionspartnern der finanzielle Aspekt der Zahlungstransaktion durchgeführt werden, wobei vom Bezahlungsterminal die Bezahlungsaufforderung der Zahlungstransaktion an das an der betreffenden Zahlungstransaktion beteiligte Mobilgerät übermittelt wird und, beispielsweise nachdem die Bezahlungsaufforderung vom betreffenden Kunden mittels Bedienungselementen des Mobilgeräts akzeptiert wurde, im Mobilgerät ein Bezahlungsbeleg vorbereitet wird, indem die Bezahlungsaufforderung mit einer Kundenidentifizierung des Kunden verknüpft wird und beispielsweise mit einer elektronischen Signatur des Kunden versehen oder als gesichertes Zertifikat ausgeführt wird, und der Bezahlungsbeleg vom Mobilgerät an das an der betreffenden Zahlungstransaktion beteiligte Bezahlungsterminal übermittelt wird, wo der Bezahlungsbeleg weiterverarbeitet und/oder weitergeleitet wird, z.B. an eine Clearingstelle.

Der Vorteil dieses zweiphasigen Vorgehens besteht darin, dass vor dem Austausch von finanziellen Daten der bargeldlosen Zahlungstransaktion die Zahlungstransaktionspartner einander eindeutig zugeordnet werden, wobei beispielsweise auch die Authentizität der beiden Partner überprüft werden kann, so dass Bezahlungsaufforderungen von einem Bezahlungsterminal automatisch an das zuständige Mobilgerät übertragen und dort dem zuständigen Kunden zur Verfügung gestellt werden können und dass Bezahlungsbelege, die insbesondere mit einer elektronischen Signatur des Kunden versehen werden können, automatisch vom zuständigen Mobilgerät an das zuständige Bezahlungsterminal übermittelt werden können.

Vorzugsweise wird bei der Übermittlung der vom Kunden eingegebenen Transaktionsidentifizierung vom Mobilgerät an das Bezahlungsterminal eine Senderidentifizierung mitübermittelt, beispielsweise eine Geräteidentifizierung des Mobilgeräts oder eine logische oder physikalische Adresse der kontaktlosen Schnittstelle des Mobilgeräts, und die Bezahlungsaufforderung vom Bezahlungsterminal an das durch diese Senderidentifizierung bestimmte Mobilgerät übermittelt. Der Vorteil der mitübermittelten Senderidentifizierung besteht darin, dass das Bezahlungsterminal ein Mobilgerät als Zahlungstransaktionspartner direkt adressieren kann und andere Mobilgeräte, die nicht an der betreffenden Zahlungstransaktion beteiligt sind, nicht die Inhalte von von mehreren Bezahlungsterminals erhaltenen unadressierten Übermittlungen untersuchen müssen.

In einer Ausführungsvariante erhöht das Bezahlungsterminal mindestens einmal die Sendeleistung der kontaktlosen Geräteschnittstelle und übermittelt die Bezahlungsaufforderung mit der erhöhten Sendeleistung an das Mobilgerät, wenn das Bezahlungsterminal innerhalb einer vordefinierten Zeitdauer ab der Übermittlung der Bezahlungsaufforderung ohne Leistungserhöhung an das Mobilgerät vom Mobilgerät keinen Bezahlungsbeleg erhalten hat. Die Variierung der Sendeleistung hat den Vorteil, dass einerseits andere Mobilgeräte, die an der betreffenden Zahlungstransaktion nicht beteiligt sind und die sich üblicherweise in einer grösseren Entfernung vom Bezahlungsterminal befinden als ein an der Zahlungstransaktion beteiligtes Mobilgerät, nicht unnötig durch Übermittlungen der Bezahlungsterminals behelligt werden, und dass andererseits, wenn sich das an der Zahlungstransaktion beteiligte Mobilgerät ausserhalb der Reichweite der nicht erhöhten Sendeleistung des Bezahlungsterminals befindet, durch die Erhöhung der Sendeleistung trotzdem noch erreicht werden kann.

Vorzugsweise werden im Mobilgerät vor der Übermittlung des Bezahlungsbelegs an das Bezahlungsterminal Angaben über die Bezahlungsart, beispielsweise Belastung auf eine bestimmte Kreditkartennummer, Belastung auf ein bestimmtes Kundenkonto, Belastung auf ein bestimmtes Bankkonto, oder Belastung auf einen im Mobilgerät gespeicherten vorausbezahlten Geldbetrag, beispielsweise auf der SIM-Karte des Mobilgeräts, in den Bezahlungsbeleg eingefügt. Das Einfügen von Angaben über die beabsichtigte Bezahlungsart hat den Vorteil, dass dadurch die Flexibilität des erfindungsgemässen Zahlungstransaktionsverfahrens und Zahlungstransaktionssystems erhöht wird, und dass je nach Art der gewünschten Bezahlungsart mindestens gewisse Zahlungstransaktionen direkt (on-line) und automatisch verbucht werden können, während andere nachträglich (off-line), beispielsweise unter Zuhilfenahme einer dafür geeigneten Clearingstelle, verbucht werden können.

In einer Ausführungsvariante wird der Bezahlungsbeleg im Mobilgerät gespeichert, beispielsweise auf der SIM-Karte des Mobilgeräts. Der Vorteil der Speicherung von Bezahlungsbelegen im Mobilgerät besteht darin, dass dem Kunden dadurch ermöglicht wird, über getätigte Zahlungstransaktionen Buch zu führen und einen im Mobilgerät gespeicherten Bezahlungsbeleg als Quittung zu verwenden, insbesondere dann, wenn die im Bezahlungsbeleg enthaltene Bezahlungsaufforderung ein Zertifikat oder eine elektronische Signatur der betreffenden Dienststelle enthält.

In einer Ausführungsvariante authentifiziert sich der Kunde bei seinem Mobilgerät beispielsweise mit einem biometrischen Merkmal, zum Beispiel mit einem Fingerabdruck, einem Stimmmuster oder einem Augenmuster. Die Verwendung von biometrischen Merkmalen zur Authentifizierung eines Benutzers hat den Vorteil, dass die damit verbundene Sicherheit höher ist als bei der Verwendung eines persönlichen Codes, der beispielsweise durch unrechtmässige Benutzer erraten oder vom rechtmässigen Benutzer vergessen werden kann.

Nachfolgend wird eine Ausführung der vorliegenden Erfindung anhand eines Beispieles beschrieben. Das Beispiel der Ausführung wird durch folgende einzige beigelegte Figur illustriert:

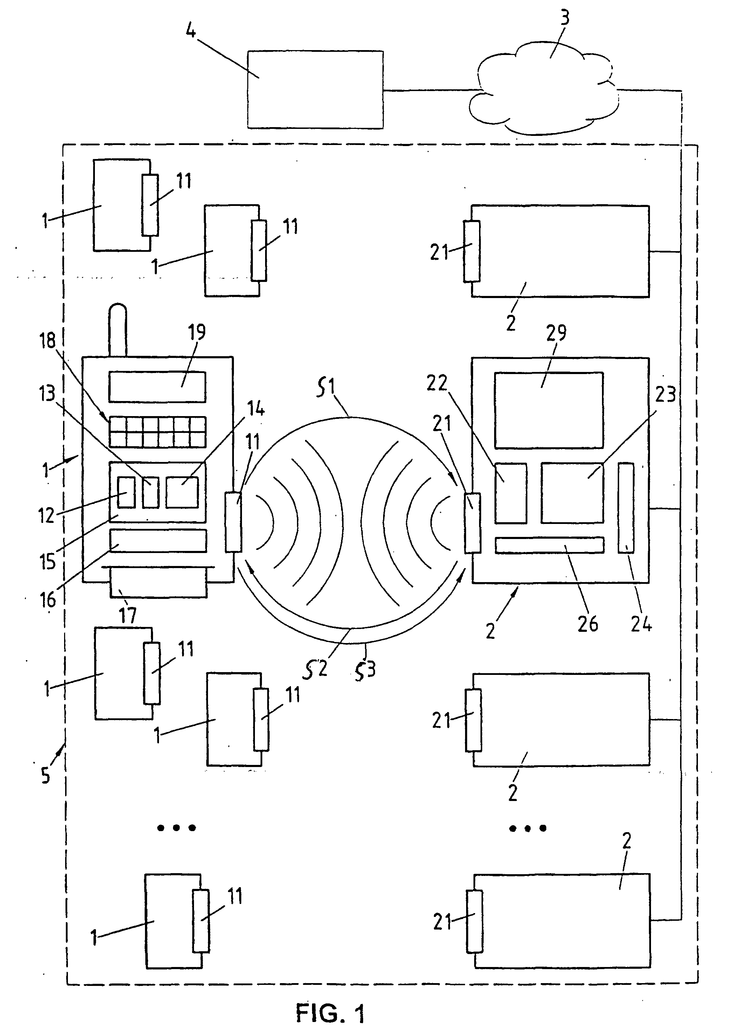

Figur 1 zeigt ein Blockdiagramm, welches schematisch eine Dienststelle darstellt, in der sich mehrere Mobilgeräte und mehrere Bezahlungsterminals befinden, wobei die Bezahlungsterminals über ein Telekommunikationsnetz mit einer Clearingstelle verbunden sind.

In der Figur 1 sind Elemente, die mit einer gleichen Bezugsziffer bezeichnet sind, als gleichwertige Elemente zu betrachten. In der Figur 1 bezieht sich die Bezugsziffer 5 auf eine Dienststelle, einen sogenannten Point of Sale (POS), zum Beispiel eine öffentlich zugängliche Verkaufsstelle von Produkten und/oder Dienstleistungen. Wie in der Figur 1 illustriert wird, befinden sich in der Dienststelle 5 mehrere Bezahlungsterminals 2 und mehrere von Kunden getragene Mobilgeräte 1.

Die tragbaren Mobilgeräte 1 sind beispielsweise Mobilfunktelefone, Laptop- oder Palmtop-Computer oder andere geeignete tragbare Mobilgeräte, die über eine kontaktlose Geräteschnittstelle 11 verfügen, um mit entsprechenden kontaktlosen Geräteschnittstellen 21 der Bezahlungsterminals 2 zu kommunizieren, das heisst bidirektional Daten auszutauschen.

Die in der Figur 1 schematisch dargestellten kontaktlosen Geräteschnittstellen 11, 21 umfassen jeweils die nötigen Hardwareelemente für den Sender und Empfänger der kontaktlosen Geräteschnittstelle, für die Steuerung der kontaktlosen Geräteschnittstelle sowie für die Verbindung der kontaktlosen Schnittstelle mit einem Prozessor 16, 26 des Mobilgeräts 1, respektive des Bezahlungsterminals 2. Die in der Figur 1 schematisch dargestellten kontaktlosen Geräteschnittstellen 11, 21 umfassen zudem jeweils programmierte Softwaremodule und Softwareschnittstellen, die zum Betreiben und zum Steuern der kontaktlosen Schnittstelle 11; 21 benötigt werden und die auch das oder die für die Kommunikationsabwicklung nötigen Kommunikationsprotokolle ausführen. Die kontaktlosen Geräteschnittstellen 11, 21 sind zum Beispiel Infrarotschnittstellen, zum Beispiel High Speed Infrared (HSIR)-Schnittstellen oder IrDA-Schnittstellen (Infrared Data Association), induktive Schnittstellen, zum Beispiel Radio Frequency Identification (RFID)-Schnittstellen, Home RF (Radio Frequency)-Schnittstellen, Digital European Cordless Telecommunications (DECT)-Schnittstellen oder andere Cordless Telecommunications System (CTS)-Schnittstellen, oder hochfrequente Funkschnittstellen, insbesondere sogenannte Bluetooth-Schnittstellen, die z.B. bei 2.4GHz arbeiten und zum Anmeldezeitpunkt der vorliegenden Erfindung beispielsweise im Internet auf der Seite "www.bluetooth.com" beschrieben wurden.

Der in der vorliegenden Beschreibung verwendete Begriff "Softwaremodul" bezieht sich jeweils auf Programmcode, der in einem Speicher gespeichert und auf einem Prozessor ausgeführt wird, beispielsweise in Kooperation mit geeigneten Operationssystemen und/oder unter Zuhilfenahme von Diensten von Virtuellen Plattformen, z.B. eine Java Virtual Machine (Java ist ein eingetragenes Warenzeichen von Sun Microsystems), so dass der Prozessor so gesteuert wird, dass er die jeweiligen dem Softwaremodul zugeordneten Funktionen ausführt. Der Fachmann wird verstehen, dass die für die Ausführung der Softwaremodule verwendete Programmiersprache den Sinn der vorliegenden Erfindung nicht verändert, dass aber die Verwendung von gewissen Programmiersprachen, beispielsweise Java oder eine andere objektorientierte und Plattform-unabhängige Programmiersprache, durchaus dem Fachmann bekannte Vorteile aufweisen können.

Die Bezahlungsterminals 2 basieren beispielsweise auf herkömmlichen elektronischen Kassensystemen, die zum Beispiel mit nicht dargestellten Bedienungselementen und Preiserfassungskomponenten, z.B. Laserscanners, ausgerüstet sind und mindestens einen Prozessor 26 sowie eine oben beschriebene kontaktlose Geräteschnittstelle 21 umfassen. Die Bezahlungsterminals 2 umfassen ein Transaktionsidentifizierungsmodul 22, das beispielsweise als programmiertes Softwaremodul ausgeführt ist, welches für eine Zahlungstransaktion eine Transaktionsidentifizierung bestimmt. Diese Transaktionsidentifizierung enthält mindestens eine Bezahlungsterminalidentifizierung, welche es ermöglicht, ein betreffendes Bezahlungsterminal 2 unter den mehreren in der Dienststelle 5 vorhandenen Bezahlungsterminals 2 zu bestimmen, sowie eine Transaktionsnummer, die beispielsweise für jede neue Zahlungstransaktion fortlaufend inkrementiert wird.

Die für eine Zahlungstransaktion bestimmte Transaktionsidentifizierung wird vom Bezahlungsterminal 2, beispielsweise vom Transaktionsidentifizierungsmodul 22 oder von einem anderen programmierten Softwaremodul des Bezahlungsterminals 2, zusammen mit dem vom Bezahlungsterminal 2 für diese Zahlungstransaktion bestimmten, vom betreffenden Kunden zu bezahlenden Transaktionstotalbetrag auf einer Anzeige 29 des Bezahlungsterminals 2 angezeigt. Der betreffende Kunde wird dadurch über den Transaktionstotalbetrag und die Transaktionsidentifizierung der Zahlungstransaktion informiert.

Falls der Kunde den Totalbetrag der Zahlungstransaktion mittels seinem Mobilgerät 1 bezahlen möchte, schaltet er sein Mobilgerät 1 ein und wird in einer Ausführungsvariante sicherheitshalber von einem Authentifizierungsmodul 12 des Mobilgeräts 1, beispielsweise ein programmiertes Softwaremodul, aufgefordert, sich zu authentifizieren. Der Kunde wird beispielsweise aufgefordert, einen persönlichen Identifizierungscode einzugeben (Personal Identification Number, PIN), der vom Authentifizierungsmodul 12 entgegengenommen und mit einem im Mobilgerät 1, beispielsweise auf einer SIM-Karte 17 (Subscriber Identification Module) des Mobilgeräts 1, gesichert gespeicherten Code verglichen wird. In einer Variante verfügt das Authentifizierungsmodul zudem über Hardwarekomponenten und weitere Softwarekomponenten, um vom Kunden ein biometrisches Merkmal zur Authentifizierung entgegenzunehmen und mit einem vorgängig im Mobilgerät 1, beispielsweise auf einer SIM-Karte 17 des Mobilgeräts 1, gesichert gespeicherten biometrischen Merkmal zu vergleichen. Das biometrische Merkmal ist beispielsweise ein Stimmmuster, das mittels einem Mikrofon des Mobilgeräts 1 aufgenommen wird, ein Fingerabdruck oder Gesichtszüge, die mit einem Videosensor des Mobilgeräts 1 erfasst werden, oder ein Augenmuster, z.B. ein Muster der Iris oder der Retina, das mit einem geeigneten Scanner aufgenommen wird.

Gegebenenfalls nach einer erfolgreichen Authentifizierung wählt der Kunde auf seinem Mobilgerät 1, beispielsweise mittels der Bedienungselemente 18 aus einem auf der Anzeige 19 des Mobilgeräts 1 dargestellten Funktionsmenü die Funktion "Zahlungstransaktion". Die Menü- und Funktionsablaufsteuerung wird beispielsweise durch ein programmiertes Softwaremodul des Mobilgeräts 1 ausgeführt, z.B. durch ein Java-Applet, das beispielsweise auf der SIM-Karte 17 des Mobilgeräts 1 gespeichert ist. Aus Sicherheitsgründen kann das (oder die) Softwaremodul(e) zur Ausführung der Funktion "Zahlungstransaktion" beispielsweise von einem zuständigen Betreiber über die kontaktlose Geräteschnittstelle 11 oder über ein nicht dargestelltes Mobilfunknetz gesperrt werden, beispielsweise indem ein signiertes oder zertifiziertes Befehlswort mittels geeigneten Meldungen an das Mobilgerät 1 übermittelt wird.

Nach der Wahl der Funktion für die Zahlungstransaktion wird der Benutzer vom Transaktionsantwortmodul 13 des Mobilgeräts 1, beispielsweise ein programmiertes Softwaremodul, aufgefordert, die Transaktionsidentifizierung der betreffenden Zahlungstransaktion einzugeben. Der Kunde kann die Transaktionsidentifizierung beispielsweise mittels Bedienungselementen 18 des Mobilgeräts 1 eintippen. Um Eingabefehler zu vermeiden, kann in einer Variante das Transaktionsantwortmodul 13 von den Bezahlungsterminals 2 über die kontaktlose Geräteschnittstelle 11, 21 die Transaktionsidentifizierungen der laufenden Zahlungstransaktionen anfordern, so dass der Kunde die Transaktionsidentifizierung der betreffenden Zahlungstransaktion eingeben kann, indem er die betreffende Transaktionsidentifizierung mittels der Bedienungselemente 18 des Mobilgeräts 1 aus einer auf der Anzeige 19 des Mobilgeräts 1 angezeigten Liste von aktuellen Transaktionsidentifizierungen selektiert.

Das Transaktionsantwortmodul 13 entnimmt der vom Kunden entgegengenommenen Transaktionsidentifizierung die darin enthaltene Bezahlungsterminalidentifizierung und übermittelt, wie in der Figur 1 durch den Pfeil S1 angedeutet, die Transaktionsidentifizierung an das durch diese Bezahlungsterminalidentifizierung identifizierte Bezahlungsterminal 2. Der Fachmann wird verstehen, dass je nach Art der kontaktlosen Geräteschnittstelle 11, 21 die Bezahlungsterminalidentifizierung dabei vom Transaktionsantwortmodul 13 gemäss dem von der ISO (International Standards Organisation) definierten OSI-Referenzmodell (Open Systems Interconnection) als Adresse auf der physikalischen Ebene oder als Adresse auf einer der darüberliegenden Ebenen (Protokollschicht) verwendet werden kann. Bei der Übermittlung der Transaktionsidentifizierung an das betreffende Bezahlungsterminal 2 wird beispielsweise durch das Transaktionsantwortmodul 13 oder durch entsprechende Funktionen der kontaktlosen Geräteschnittstelle 11 eine Senderidentifizierung, die das betreffende Mobilgerät 1, respektive die kontaktlose Schnittstelle 11 des betreffenden Mobilgeräts 1 in der Dienststelle 5 identifiziert, zur Mitübermittlung der Transaktionsidentifizierung beigefügt.

Im betreffenden Bezahlungsterminal 2 wird die übermittelte Transaktionsidentifizierung, und gegebenenfalls die beigefügte Senderidentifizierung, über die kontaktlose Schnittstelle 21 entgegengenommen und beispielsweise eine logische Verbindung zwischen dem Bezahlungsterminal 2 und dem Mobilgerät 1 erstellt. Von einem Bezahlungsaufforderungsmodul 23 des betreffenden Bezahlungsterminals 2, beispielsweise ein programmiertes Softwaremodul, wird danach eine Bezahlungsaufforderung vorbereitet, die mindestens die Dienststellenidentifizierung der Dienststelle 5, die Bezahlungsterminalidentifizierung des betreffenden Bezahlungsterminals 2 sowie den zu bezahlenden Transaktionstotalbetrag der betreffenden Zahlungstransaktion enthält. Der Fachmann wird verstehen, dass die Dienststellenidentifizierung und die Bezahlungsterminalidentifizierung auch durch eine kombinierte eindeutige Bezahlungsterminalidentifizierung ersetzt werden kann, allerdings ergibt sich dadurch auf Grund der Anzahl benötigten Ziffern eine Transaktionsidentifizierung, die sich nicht für das manuelle Eintippen in das Mobilgerät 1 eignet. Das Bezahlungsaufforderungsmodul 23 übermittelt die vorbereitete Bezahlungsaufforderung, wie in der Figur 1 durch den Pfeil S2 angedeutet, über die kontaktlose Geräteschnittstelle 21 an das Mobilgerät 1, von welchem die Transaktionsidentifizierung erhalten wurde. Dazu verwendet das Bezahlungsaufforderungsmodul 23 die von diesem Mobilgerät 1 erhaltene Senderidentifizierung, respektive die vorgängig erstellte logische Verbindung, oder übermittelt in einer Variante die Bezahlungsaufforderung Broadcast-mässig, wobei die Bezahlungsaufforderung in den empfangenden Mobilgeräten 1 auf Grund der Transaktionsidentifizierung gefiltert wird. An dieser Stelle sollte erwähnt werden, dass die Bezahlungsaufforderung zur Erhöhung der Sicherheit, insbesondere zur Bestimmung der Authentizität des Bezahlungsterminals 2, durch das Bezahlungsaufforderungsmodul 23 mit einer elektronischen Signatur der Dienststelle 5 oder des Bezahlungsterminals 2 versehen wird oder als gesichertes Zertifikat ausgeführt wird.

Im betreffenden Mobilgerät 1 wird die übermittelte Bezahlungsaufforderung über die kontaktlose Schnittstelle 11 entgegengenommen und, je nach Variante, gegebenenfalls auf Grund der darin enthaltenen Transaktionsidentifizierung gefiltert, indem die in der Bezahlungsaufforderung enthaltene Transaktionsidentifizierung vom Mobilgerät 1 mit der vorgängig an das Bezahlungsterminal 2 übermittelten Transaktionsidentifizierung verglichen wird. In einem Bezahlungsbelegmodul 14 des Mobilgeräts 1, beispielsweise ein programmiertes Softwaremodul, wird auf Grund der empfangenen Bezahlungsaufforderung ein Bezahlungsbeleg vorbereitet, beispielsweise nachdem die Authentizität der Bezahlungsaufforderung, respektive die Authentizität des Bezahlungsterminals 2 überprüft wurde und die Bezahiungsaufforderung dem Kunden auf der Anzeige 19 des Mobilgeräts 1 angezeigt wurde und der Kunde die Bezahlung mittels den Bedienungselementen 18 des Mobilgeräts 1 akzeptiert und damit freigegeben hat: Der vorbereitete Bezahlungsbeleg umfasst die entgegengenommene Bezahlungsaufforderung und eine Kundenidentifizierung des Kunden, beispielsweise eine IMSI (International Mobile Subscriber Identity) oder eine speziell für diese, hier beschriebene Zahlungsart zugeteilte Benutzernummer, die jeweils auf der SIM-Karte 17 des Mobilgeräts 1 gespeichert sind. Zur Verbesserung der Sicherheit kann der Bezahlungsbeleg durch das Bezahlungsbelegmodul 14 mit einer elektronischen Signatur des betreffenden Kunden 5 versehen oder als gesichertes Zertifikat ausgeführt werden.

Vorteilhafterweise fügt das Bezahlungsbelegmodul 14 zudem Angaben über die gewünschte Zahlungsart in den Bezahlungsbeleg ein, welche Angaben beispielsweise als Default-Wert in der SIM-Karte 17 des Mobilgeräts 1 gespeichert sind oder vom betreffenden Kunden über die Anzeige 19 des Mobilgeräts 1 angefordert und über die Bedienungselemente 18 entgegengenommen werden. Die Angaben über die gewünschte Zahlungsart spezifizieren beispielsweise eine gewünschte Belastung des zu zahlenden Transaktionstotalbetrags auf eine bestimmte Kreditkartennummer, eine Belastung auf ein bestimmtes Kundenkonto, eine Belastung auf ein bestimmtes Bankkonto oder eine Belastung auf einen im Mobilgerät gespeicherten vorausbezahlten Geldbetrag, beispielsweise auf der SIM-Karte des Mobilgeräts. Das Bezahlungsbelegmodul 14 übermittelt den vorbereiteten Bezahlungsbeleg, wie in der Figur 1 durch den Pfeil S3 angedeutet, über die kontaktlose Geräteschnittstelle 11, 21 an das Bezahlungsterminal 2, von welchem die Bezahlungsaufforderung erhalten wurde. Vorteilhafterweise werden die Bezahlungsbelege, beispielsweise durch das Bezahlungsbelegmodul 14, in einem Speicher 15 des Mobilgeräts 1 gespeichert, beispielsweise auf einer SIM-Karte 17 des Mobilgeräts 1, so dass sie später als Quittung verwendet werden können und/oder dass sie dem betreffenden Kunden zur Verwaltung der von ihm getätigten Zahlungstransaktionen zur Verfügung stehen.

Im betreffenden Bezahlungsterminal 2 wird der Bezahlungsbeleg beispielsweise vom Bezahlungsaufforderungsmodul 23 entgegengenommen und, gegebenenfalls unter Berücksichtigung der darin enthaltenen Angaben über die vom Kunden gewünschte Zahlungsart, weiterverarbeitet und die erstandenen Produkte und/oder Dienstleistungen dem Kunden, beispielsweise nach erfolgter Prüfung der Bonität des Kunden und/oder nach der Prüfung der Signatur des Kunden, freigegeben. Mittels einem Kommunikationsmodul 24 können die Bezahlungsbelege beispielsweise über das Telekommunikationsnetz 3 an eine Clearingstelle 4 weitergeleitet werden.

Falls das Bezahlungsaufforderungsmodul 23 innerhalb einer vordefinierten Zeitdauer ab der Übermittlung der Bezahlungsaufforderung vom Mobilgerät 1 keinen Bezahlungsbeleg erhält, kann das Bezahlungsaufforderungsmodul 23 in einer Ausführungsvariante, beispielsweise über die Softwareschnittstelle der kontaktlosen Geräteschnittstelle 21, die Sendeleistung der kontaktlosen Geräteschnittstelle 21 erhöhen und die Bezahlungsaufforderung erneut aussenden. Dadurch kann die üblicherweise verwendete Sendeleistung so bemessen werden, dass sie ausreicht, um Daten erfolgreich vom Bezahlungsterminal 2 über die kontaktlose Geräteschnittstelle 21 an das Mobilgerät 1 zu übermitteln, wenn sich das Mobilgerät 1 in unmittelbarer Nähe des betreffenden Bezahlungsterminals 2 befindet, beispielsweise innerhalb eines bis zwei Metern, ohne dabei weiter entfernte Mobilgeräte 1 zu behelligen.

Wie bereits im Zusammenhang mit der Menü- und Funktionsablaufsteuerung für das Anwählen der Funktion "Zahlungstransaktion" erwähnt wurde, können die Softwaremodule, insbesondere das Transaktionsantwortmodul 13 und das Bezahlungsbelegmodul 14 sowie Softwarekomponenten des Authentifizierungsmoduls 12, beispielsweise auf der SIM-Karte 17 des Mobilgeräts gespeichert werden, zum Beispiel als Java-Applet, und beispielsweise auch auf einem Prozessor der SIM-Karte 17 ausgeführt werden. Die Softwaremodule können zudem so realisiert werden, dass sie von einem berechtigten Betreiber über die kontaktlose Geräteschnittstelle 11 oder über ein nicht dargestelltes Mobilfunknetz gesperrt werden können, beispielsweise wenn der Eigentümer des Mobilgeräts 1 den Verlust des betreffenden Mobilgeräts 1 einem zuständigen Betreiber gemeldet hat.

An dieser Stelle sollte zudem darauf aufmerksam gemacht werden, dass in der obenstehenden Beschreibung als konkrete Beispiele für die Mobilgeräte 1 bloss Mobilfunkgeräte sowie Palm- und Laptop-Computer angeführt wurden. Der Fachmann wird aber verstehen, dass auch andere, insbesondere einfachere Mobilgeräte 1 mit geeigneten kontaktlosen Geräteschnittstellen 11, welche Mobilgeräte 1 beispielsweise keine Mobiltelefonkomponenten für die Kommunikation über ein Mobilfunknetz umfassen, verwendet werden können, die nur die für die Beteiligung am beschriebenen Verfahren notwendigen Softwaremodule und Hardwarekomponenten umfassen und die beispielsweise von der Dienststelle 5 den Kunden für ihren Aufenthalt in der Dienststelle 5 zur Verfügung gestellt werden und in die die Kunden, insbesondere für Authentifizierungs- und Identifizierungszwecke aber auch für die Speicherung der Bezahlungsbelege, ihre persönlichen Chipkarten, zum Beispiel SIM-Karten 17, einführen können.

Als abschliessender Punkt soll zudem angeführt werden, dass die Datenübertragungen über die kontaktlose Schnittstelle 11, 21 zur Erhöhung der Sicherheit gemäss einem dem Fachmann bekannten Verfahren verschlüsselt werden können.

## Patentansprüche

1. Zahlungstransaktionsverfahren zwischen einem Kunden mit einem tragbaren Mobilgerät (1) und einer Dienststelle (5), in welchem Zahlungstransaktionsverfahren ein Bezahlungsterminal (2) der Dienststelle (5) einen zu bezahlenden Transaktionstotalbetrag und eine diesem Transaktionstotalbetrag zugeordnete Transaktionsidentifizierung bestimmt, das Bezahlungsterminal (2) bei der Bestimmung der Transaktionsidentifizierung eine Bezahlungsterminalidentifizierung in die Transaktionsidentifizierung einfügt, welche Bezahlungsterminalidentifizierung ermöglicht, das betreffende Bezahlungsterminal (2) aus mehreren in der Dienststelle (5) vorhandenen Bezahlungsterminals (2) zu identifizieren, **dadurch gekennzeichnet, daß** der Kunde über den Transaktionstotalbetrag und die Transaktionsidentifizierung informiert wird, und in welchem Zahlungstransaktionsverfahren der Kunde die Transaktionsidentifizierung in das Mobilgerät (1) eingibt,
dass das Mobilgerät (1) die vom Kunden eingegebene Transaktionsidentifizierung über eine kontaktlose Geräteschnittstelle (11) an das durch die Bezahlungsterminalidentifizierung identifizierte Bezahlungsterminal (2) übermittelt,
dass das Bezahlungsterminal (2) nach dem Empfang der Transaktionsidentifizierung eine Bezahlungsaufforderung, die mindestens eine Dienststellenidentifizierung, die Bezahlungsterminalidentifizierung und den Transaktionstotalbetrag umfasst, über die kontaktlose Geräteschnittstelle (21) an das Mobilgerät (1) übermittelt, und
dass im Mobilgerät (1) ein Bezahlungsbeleg, der eine Verknüpfung der Bezahlungsaufforderung mit einer Kundenidentifizierung des Kunden umfasst, vorbereitet und vom Mobilgerät (1) über die kontaktlose Geräteschnittstelle (11) an.das Bezahlungsterminal (2) übermittelt wird.

2. Zahlungstransaktionsverfahren gemäss Anspruch 1, **dadurch gekennzeichnet, dass** bei der Übermittlung der vom Kunden eingegebenen Transaktionsidentifizierung vom Mobilgerät (1) an das Bezahlungsterminal (2) eine Senderidentifizierung mitübermittelt wird, und dass das Bezahlungsterminal (2) die Bezahlungsaufforderung an das durch die Senderidentifizierung bestimmte Mobilgerät (1) übermittelt.

3. Zahlungstransaktionsverfahren gemäss einem der Ansprüche 1 oder 2, **dadurch gekennzeichnet, dass** das Bezahlungsterminal (2) mindestens einmal die Sendeleistung der kontaktlosen Geräteschnittstelle (21) erhöht und die Bezahlungsaufforderung mit der erhöhten Sendeleistung an das Mobilgerät (1) übermittelt, wenn das Bezahlungsterminal (2) innerhalb einer vordefinierten Zeitdauer ab der Übermittlung der Bezahlungsaufforderung ohne Leistungserhöhung an das Mobilgerät (1) vom Mobilgerät (1) keinen Bezahlungsbeleg erhalten hat.

4. Zahlungstransaktionsverfahren gemäss einem der Ansprüche 1 bis 3, **dadurch gekennzeichnet, dass** im Mobilgerät (1) vor der Übermittlung des Bezahlungsbelegs an das Bezahlungsterminal (2) Angaben über die Bezahlungsart in den Bezahlungsbeleg eingefügt werden.

5. Zahlungstransaktionsverfahren gemäss einem der Ansprüche 1 bis 4, **dadurch gekennzeichnet, dass** sich der Kunde vor der Eingabe der Transaktionsidentifizierung bei seinem Mobilgerät (1) mit einem biometrischen Merkmal authentifiziert.

6. Zahlungstransaktionssystem umfassend mehrere tragbare Mobilgeräte (1) und mehrere Bezahlungsterminals (2) in einer Dienststelle (5), welche Mobilgeräte (1) und Bezahlungsterminals (2) jeweils mindestens einen Prozessor (16, 26) und eine kontaktlose Geräteschnittstelle (11, 21) umfassen, über welche kontaktlose Geräteschnittstelle (11) die Mobilgeräte (1) mit den Bezahlungsterminals (2) kommunizieren können, welche Bezahlungsterminals (2) jeweils Mittel (29) umfassen, um einen Kunden über einen zu bezahlenden Transaktionstotalbetrag einer Zahlungstransaktion und eine dieser Zahlungstransaktion zugeordnete Transaktionsidentifizierung zu informieren,
welche Bezahlungsterminals (2) jeweils ein Transaktionsidentifizierungsmodul (22) umfassen, welches Transaktionsidentifizierungsmodul (22) jeweils die Transaktionsidentifizierung für eine Zahlungstransaktion bestimmt und jeweils eine Bezahlungsterminalidentifizierung des betreffenden Bezahlungsterminals (2) in die Transaktionsidentifizierung einfügt,
welche Mobilgeräte (1) jeweils ein Transaktionsantwortmodul (13) umfassen, welches Transaktionsantwortmodul (13) eine von einem Kunden mittels Bedienungselementen (18) des betreffenden Mobilgeräts (1) eingegebene Transaktionsidentifizierung entgegennimmt und über die kontaktlose Geräteschnittstelle (11) an das durch die in der Transaktionsidentifizierung enthaltene Bezahlungsterminalidentifizierung bestimmte Bezahlungsterminal (2) übermittelt,
welche Bezahlungsterminals (2) jeweils ein Bezahlungsaufforderungsmodul (23) umfassen, welches Bezahlungsaufforderungsmodul (23), nach dem Empfang einer Transaktionsidentifizierung von einem Mobilgerät (1), eine Bezahlungsaufforderung, die mindestens eine Dienststellenidentifizierung der Dienststelle (5), die Bezahlungsterminalidentifizierung des betreffenden Bezahlungsterminals (2) und den Transaktionstotalbetrag der durch die empfangene Transaktionsidentifizierung bestimmten Zahlungstransaktion umfasst, über die kontaktlose Geräteschnittstelle (21) an das Mobilgerät (1) übermittelt, von welchem die Transaktionsidentifizierung empfangen wurde, und
welche Mobilgeräte (1) jeweils ein Bezahlungsbelegmodul (14) umfassen, welches Bezahlungsbelegmodul (14) einen Bezahlungsbeleg vorbereitet, der eine durch das betreffende Mobilgerät (1) von einem Bezahlungsterminal (2) entgegengenommene Bezahlungsaufforderung und eine Kundenidentifizierung des betreffenden Kunden umfasst, und den vorbereiteten Bezahlungsbeleg über die kontaktlose Geräteschnittstelle (11) an das Bezahlungsterminal (2) übermittelt, von welchem die Bezahlungsaufforderung entgegengenommen wurde.

7. System gemäss Anspruch 6, **dadurch gekennzeichnet, dass** die Mobilgeräte (1) jeweils Mittel umfassen, um bei der Übermittlung der vom Kunden eingegebenen Transaktionsidentifizierung an das Bezahlungsterminal (2) eine Senderidentifizierung mitzuübermitteln, und dass das Bezahlungsaufforderungsmodul (23) Mittel umfasst, um die Bezahlungsaufforderung an das durch die Senderidentifizierung bestimmte Mobilgerät (1) zu übermitteln.

8. System gemäss einem der Ansprüche 6 oder 7, **dadurch gekennzeichnet, dass** die Bezahlungsterminals (2) jeweils Mittel umfassen, um die Sendeleistung der kontaktlosen Geräteschnittstelle (21) zu erhöhen, dass das Bezahlungsaufforderungsmodul (23) Mittel umfasst, um die Bezahlungsaufforderung mit erhöhter Sendeleistung an ein betreffendes Mobilgerät (1) zu übermitteln, wenn das Bezahlungsterminal (2) innerhalb einer vordefinierten Zeitdauer ab der Übermittlung der Bezahlungsaufforderung ohne Leistungserhöhung an das betreffende Mobilgerät (1) vom betreffenden Mobilgerät (1) keinen Bezahlungsbeleg erhalten hat.

9. System gemäss einem der Ansprüche 6 bis 8, **dadurch gekennzeichnet, dass** das Bezahlungsbelegmodul (14) Mittel umfasst, um vor der Übermittlung des Bezahlungsbelegs an ein Bezahlungsterminal (2) Angaben über die Bezahlungsart in den Bezahlungsbeleg einzufügen.

10. System gemäss einem der Ansprüche 6 bis 9, **dadurch gekennzeichnet, dass** die Mobilgeräte (1) jeweils ein Authentifizierungsmodul (12) umfassen, um von einem Kunden mindestens ein biometrisches Merkmal entgegenzunehmen und um den Kunden auf Grund des entgegengenommenen biometrischen Merkmals zu authentifizieren.

## Claims

1. Payment transaction method between a customer with a portable mobile device (1) and a service point (5), in which payment transaction method a payment terminal (2) of the service point (5) determines a total transaction amount to be paid and a transaction identification assigned to this total transaction amount, the payment terminal (2), during determination of the transaction identification, adds a payment terminal identification to the transaction identification, which payment terminal identification makes it possible to identify the respective payment terminal (2) from a plurality of payment terminals (2) existing at the service point (5), **characterised in that** the customer is informed about the total transaction amount and the transaction identification, and in which payment transaction method the customer enters the transaction identification into the mobile device (1),
the mobile device (1) transmits, via a contactless device interface (11), the transaction identification, entered by the customer, to the payment terminal (2) identified by the payment terminal identification,
the payment terminal (2), after receipt of the transaction identification, transmits a payment request, which comprises at least one service point identification, the payment terminal identification and the total transaction amount, via the contactless device interface (21) to the mobile device (1), and
in the mobile device (1) a payment record is prepared, which contains a linking of the payment request to a customer identification of the customer, and is transmitted from the mobile device (1) via the contactless device interface (11) to the payment terminal (2).

2. Payment transaction method according to claim 1, **characterised in that** during the transmission of the transaction identification, entered by the customer, from the mobile device (1) to the payment terminal (2) a sender identification is co-transmitted, and **in that** the payment terminal (2) transmits the payment request to the mobile device (1) established through the sender identification.

3. Payment transaction method according to one of the claims 1 or 2, **characterised in that** the payment terminal (2) increases the transmitting power of the contactless device interface (21) at least once, and transmits the payment request with the increased transmitting power to the mobile device (1), if the payment terminal (2) has not received any payment record from the mobile device (1) within a predefined time period from the transmission of the payment request without power increase to the mobile device (1).

4. Payment transaction method according to one of the claims 1 to 3, **characterised in that** in the mobile. device (1) data. about the type of payment are added to the payment record before transmission of the payment record to the payment terminal (2).

5. Payment transaction method according to one of the claims 1 to 4, **characterised in that** the customer is identified at his mobile device with a biometric feature before entering of the transaction identification.

6. Payment transaction system comprising a plurality of portable mobile devices (1) and a plurality of payment terminals (2) at a service point (5), which mobile devices (1) and payment terminals (2) each comprise at least one processor (16, 26) and one contactless device interface (11, 21) via which contactless device interface (11) the mobile devices (1) can communicate with the payment terminals (2), which payment terminals (2) each comprise means (29) of informing a customer about a total transaction amount to be paid of a payment transaction and a transaction identification assigned to this payment transaction,
which payment terminals (2) each comprise a transaction identification module (22), which transaction identification module (22) in each case determines the transaction identification for a payment transaction, and in each case adds a payment terminal identification for the respective payment terminal (2) to the transaction identification,
which mobile devices (1) each comprise a transaction response module (13), which transaction response module (13) receives a transaction identification entered by a customer by means of operating elements (18) of the respective mobile device (1) and transmits it via the contactless device interface (11) to the payment terminal (2) determined through the payment terminal identification contained in the transaction identification,
which payment terminals (2) each comprise a payment request module (23), which payment request module (23), after receipt of a transaction identification from a mobile device (1), transmits a payment request, comprising at least one service point identification of the service point (5), the payment terminal identification of the respective payment terminal (2) and the total transaction amount of the payment transaction, determined through the received transaction identification, via the contactless device interface (21) to the mobile device (1) from which the transaction identification was received, and
which mobile devices (1) each comprise a payment record module (14) which payment record module (14) prepares a payment record comprising a payment request, received by the mobile device (1) from a payment terminal (2), and a customer identification of the respective customer, and transmits the prepared payment record via the contactless device interface (11) to the payment terminal (2) from which the payment request was received,

7. System according to claim 6, **characterised in that** the mobile devices (1) each comprise means to co-transmit a sender identification when transmitting the transaction identification, entered by the customer, to the payment terminal (2) and **in that** the payment request module (23) comprises means to transmit the payment request to the mobile device (1) determined through the sender identification.

8. System according to one of the claims 6 or 7, **characterised in that** the payment terminals (2) each comprise means to increase the transmitting power of the contactless device interface (21), **in that** the payment request module (23) comprises means to transmit the payment request with increased transmitting power to a respective mobile device (1) if the payment terminal (2) has not received a payment record from the respective mobile device (1) within a predefined time period from transmission of the payment request without power increase to the respective mobile device (1).

9. System according to one of the claims 6 to 8, **characterised in that** the payment record module (14) comprises means to add to the payment record data on the type of payment before the transmission of the payment record to a payment terminal (2).

10. System according to one of the claims 6 to 9, **characterised in that** the mobile devices (1) each comprise an authentication module (12) to receive at least one biometric feature from a customer and to authenticate the customer on the basis of the received biometric feature.

## Revendications

1. Procédé de transaction de paiement entre un client avec un périphérique mobile portable (1) et une agence (5), procédé de transaction de paiement dans lequel un terminal de paiement (2) de l'agence prestataire (5) détermine un montant total de transaction à payer et une identification de transaction associée à ce montant total de transaction, le terminal de paiement (2) insère une identification de terminal de paiement dans l'identification transactionnelle lors de la détermination de l'indentification transactionnelle, identification de terminal de paiement permettant d'identifier parmi plusieurs terminaux de paiement (3) existant à l'établissement prestataire (5) le terminal de paiement considéré (2), **caractérisé en ce que** le client est informé du montant total transactionnel et de l'identification de transaction et procédé de transaction de paiement dans lequel le client saisit l'identification de transaction dans le périphérique mobile (1), **caractérisé**
**en ce que** le périphérique mobile (1) transmet l'identification transactionnelle saisie par le client par une interface de périphérique sans contact (11) au terminal de paiement (2) identifié par l'identification de terminal de paiement,
**en ce que** le terminal de paiement (2) transmet au périphérique mobile (1), par le biais d'une interface de périphérique sans contact (21) après la réception de l'identification transactionnelle, un ordre de paiement qui comprend au moins une indentification d'établissement prestataire, l'identification du terminal de paiement et le montant total de transaction et
**en ce qu'**un justificatif de paiement qui comprend l'association de l'ordre de paiement à une identification du client, est préparé dans le périphérique mobile (1) et est transmis par le périphérique mobile (1) au moyen de l'interface de périphérique sans contact (11) au terminal de paiement (2).

2. Procédé de transaction de paiement selon la revendication 1, **caractérisé en ce qu'**à la transmission de l'identification transactionnelle saisie par le client par le périphérique mobile (1) au terminal de paiement (2), une identification d'émetteur est transmise en même temps et **en ce que** le terminal de paiement (2) transmet l'ordre de paiement au périphérique mobile (1) défini par l'identification d'émetteur.

3. Procédé de transaction de paiement selon l'une des revendications 1 ou 2, **caractérisé en ce que** le terminal de paiement (2) augmente au moins une fois la puissance émettrice de l'interface de périphérique sans contact (21) et transmet l'ordre de paiement à la puissance émettrice accrue au périphérique mobile (1) quand le terminal de paiement (2) n'a obtenu du périphérique mobile (1) aucun justificatif de paiement pendant une durée prédéfinie à partir de la transmission de l'ordre de paiement sans augmentation de puissance au périphérique mobile (1).

4. Procédé de transaction de paiement selon l'une des revendications 1 à 3, **caractérisé en ce que** dans le périphérique mobile (1), des données sur le mode de paiement sont insérées dans le justificatif de paiement avant la transmission du justificatif de paiement au terminal de paiement (2).

5. Procédé de transaction de paiement selon l'une des revendications 1 à 3, **caractérisé en ce que** le client s'authentifie par une caractéristique biométrique auprès de son périphérique mobile (1) avant la saisie de l'identification transactionnelle.

6. Système de transaction de paiement, comprenant plusieurs périphériques mobiles portables (1) et plusieurs terminaux de paiement (2) dans un établissement prestataire (5), périphériques mobiles (1) et terminaux de paiement (2) qui comprennent respectivement au moins un processeur (16, 26) et une interface périphérique sans contact (11, 21), interface périphérique sans contact (11) par laquelle les périphériques mobiles (1) peuvent communiquer avec les terminaux de paiement (2), terminaux de paiement (2) qui comprennent des moyens (29) pour informer un client d'un montant total d'une transaction de paiement à régler et d'une identification de transaction associée à cette transaction de paiement,
terminaux de paiement (2) qui comprennent respectivement un module d'identification de transaction (22), module d'identification de transaction (22) qui détermine respectivement l'identification transactionnelle pour une transaction de paiement et qui insère respectivement une identification du terminal de paiement considéré (2) dans l'indentification transactionnelle,
périphériques mobiles (1) qui comportent respectivement un module de réponse de transaction, module de réponse de transaction (13) qui reçoit une identification transactionnelle saisie par un client au moyen d'éléments de commande (18) du périphérique mobile considéré (1) et qui la transmet par l'interface de périphérique sans contact (11) au terminal de paiement(2) défini par l'identification de terminal de paiement contenue dans l'identification transactionnelle,
terminaux de paiement (2) qui comprennent respectivement un module d'ordre de paiement (23), module d'ordre de paiement (23), qui transmet après la réception d'une identification transactionnelle par un périphérique mobile (1), un ordre de paiement qui comprend au moins une identification de l'établissement prestataire (5), l'identification du terminal de paiement considéré (2) et le montant total de la transaction de paiement déterminée par l'identification transactionnelle reçue au périphérique mobile (1), depuis lequel l'identification transactionnelle a été reçue, par l'interface sans contact de périphérique (21),
périphériques mobiles (1) qui comprennent respectivement un module de justificatif de paiement (14), module de justificatif de paiement (14) qui prépare un justificatif de paiement qui comprend un ordre de paiement envoyé au périphérique mobile considéré (1) par un terminal de paiement (2) et qui comprend une identification du client considéré et qui transmet, par le biais de l'interface périphérique sans contact (11), le justificatif de paiement préparé au terminal de paiement (2) qui a reçu l'ordre de paiement.

7. Système selon la revendication 6, **caractérisé en ce que** les périphériques mobiles (1) comprennent respectivement des moyens pour transmettre une identification d'émetteur en même temps que la transmission de l'identification transactionnelle saisie par le client au terminal de paiement (2) et **en ce que** le module d'ordre de paiement (23) comprend des moyens pour transmettre l'ordre de paiement au périphérique mobile (1) défini par l'identification d'émetteur.

8. Système selon l'une des revendications 6 ou 7, **caractérisé en ce que** les terminaux de paiement (2) comprennent des moyens pour augmenter la puissance émettrice de l'interface périphérique sans contact (21), **en ce que** le module d'ordre de paiement (23) comprend des moyens pour transmettre avec une puissance émettrice accrue l'ordre de paiement à un périphérique mobile considéré (1) quand le terminal de paiement (2) n'a obtenu du périphérique mobile considéré (1) aucun justificatif de paiement pendant une durée prédéfinie à partir de la transmission de l'ordre de paiement sans augmentation de puissance au périphérique mobile (1) considéré.

9. Système selon l'une des revendications 6 à 8, **caractérisé en ce que** le module de justificatif de paiement (14) comprend des moyens pour insérer des données sur le mode de paiement dans le justificatif de paiement avant la transmission du justificatif de paiement à un terminal de paiement (2).

10. Système selon l'une des revendications 6 à 8, **caractérisé en ce que** les périphériques mobiles (1) comprennent respectivement un module d'authentification (12) pour recevoir d'un client au moins une caractéristique biométrique et pour authentifier le client sur la base de la caractéristique biométrique reçue.
